# EUROPEAN PATENT SPECIFICATION

(11) **EP 2 815 119 B1**
(45) Date of publication and mention of the grant of the patent: **31.01.2018**
(21) Application number: 13785226.5
(22) Date of filing: 12.02.2013
(51) Int. Cl.: F01D 25/24

(54) **COMPOSITE FAN CONTAINMENT CASE ASSEMBLY**
GEBLÄSEGEHÄUSE AUS VERBUNDSTOFF
ENSEMBLE DE CARTER DE CONFINEMENT DE VENTILATEUR COMPOSITE

(30) Priority: 16.02.2012 US 201213397771
(43) Date of publication of application: 24.12.2014
(73) Proprietor: United Technologies Corporation, Farmington, CT 06032 (US)
(72) Inventor: LUSSIER, Darin, S., Guilford, CT 06437 (US); ROBERTSON, Thomas, J., Jr., Glastonbury, CT 06033 (US); COSTA, Mark, W., Storrs, CT 06268 (US); VOLETI, Sreenivasa, R., Farmington, CT 06032 (US); NAIK, Rajiv, A., Glastonbury, CT 06033 (US)
(74) Representative: Hughes, Andrea Michelle
(86) International application number: PCT/US2013/025690
(87) International publication number: WO 2013/165505

(56) References cited:
- EP-A2- 1 087 104
- EP-A2- 1 860 283
- EP-A2- 2 333 251
- GB-A- 2 426 287
- JP-A- 2011 256 829
- US-A1- 2011 052 383
- US-A1- 2012 034 076
- US-B1- 6 206 631
- US-B2- 7 866 939

## Description

### BACKGROUND

This disclosure pertains to a composite fan containment case for a gas turbine engine.

A gas turbine engine may include a fan section containing fan blades that are surrounded by a fan case supported within a nacelle. The function of the fan case is to contain fractured and separated parts of the fan blades in a radial direction. Metallic fan cases can be undesirably heavy to perform this containment function. A composite fan case constructed of non-metallic materials can reduce weight and provide the same containment capability as a metallic fan case.

While these fan cases have many desirable characteristics, one challenge is the components must be attached to the outer periphery of the case, typically through threaded fasteners. However, the material utilized to form the fan case has not been accommodating of bolt holes. Moreover, composite material manufacturing and forming techniques are limited in the range of tolerances that can be reliably obtained.

GB 2426287 A relates to a casing structure surrounding blades that rotate within the casing, which will prevent any broken off blade parts from damaging the enclosing casing. EP 1087104 A2 relates to an improved blade containment assembly for use within or forming a part of the gas turbine engine casing.

### SUMMARY

According to the invention a fan case for a gas turbine engine is provided with the technical features of claim 1.

In a further embodiment of the above, the fan containment case includes multiple composite layers that define a generally cylindrical case. An attachment flange extends radially outward from the cylindrical case at the front. The attachment flange comprises a portion of the composite layers. A metallic backing is secured to the attachment flange.

In a further embodiment of any of the above, the mounting ring is metallic and is secured to the outer surface at the rear.

In a further embodiment of any of the above, the composite fan containment case includes multiple composite layers that define a generally cylindrical case. The mounting ring is integral with the composite layers.

According to the invention the bolt attachment includes an internal composite boss having at least one metallic insert. The boss is attached to the outer surface with at least one fiber reinforce ply and an adhesive.

In a further embodiment of any of the above, the ballistic liner is manufactured from one of a resin impregnated KEVLAR, a ceramic material and a metallic material.

In another example, a fan case for a gas turbine engine includes a composite fan containment case including an outer surface, a front and a rear. An attachment flange and a mounting ring are respectively provided on the front and the rear. A bolt attachment is supported on the outer surface.

In a further embodiment of the above, the composite fan containment case includes multiple composite layers defining a generally cylindrical case. An attachment flange extends radially outward from the cylindrical case at the front. The attachment flange includes a portion of the composite layers, and a metallic backing ring is secured to the attachment flange.

In a further embodiment of any of the above, the mounting ring is metallic and is secured to the outer surface at the rear.

In a further embodiment of any of the above, the composite fan containment case includes multiple composite layers defining a generally cylindrical case. The mounting ring is integral with the composite layers.

In a further embodiment of any of the above, the bolt attachment includes an internal composite boss having at least one metallic insert. The boss is attached to the outer surface with at least one fiber reinforce ply and an adhesive.

### BRIEF DESCRIPTION OF THE DRAWINGS

The disclosure can be further understood by reference to the following detailed description when considered in connection with the accompanying drawings wherein:
Figure 1 is a schematic view of an example gas turbine engine.
Figure 2 is a cross-sectional view through the containment case shown in Figure 3 taken along line 2-2.
Figure 3 is a perspective view of an example containment case.
Figure 4 is an enlarged cross-sectional view of the containment case and mount ring.
Figure 5 is a cross-sectional view of another example containment case and mount ring.
Figure 6 is a perspective view of a component supported by a containment case attachment.
Figure 7 is an enlarged perspective view of the attachment shown in Figure 6.
Figure 8 is a cross-sectional view of the attachment shown in Figure 7 taken along line 8-8.
Figure 9 is a cross-sectional view of a containment case attachment flange through a fastening element.
Figure 10 is a cross-sectional view of the containment case attachment flange shown in Figure 9, but through an attaching hole.
Figure 11 is an enlarged cross-sectional view of blade containment feature of the containment case.

### DETAILED DESCRIPTION

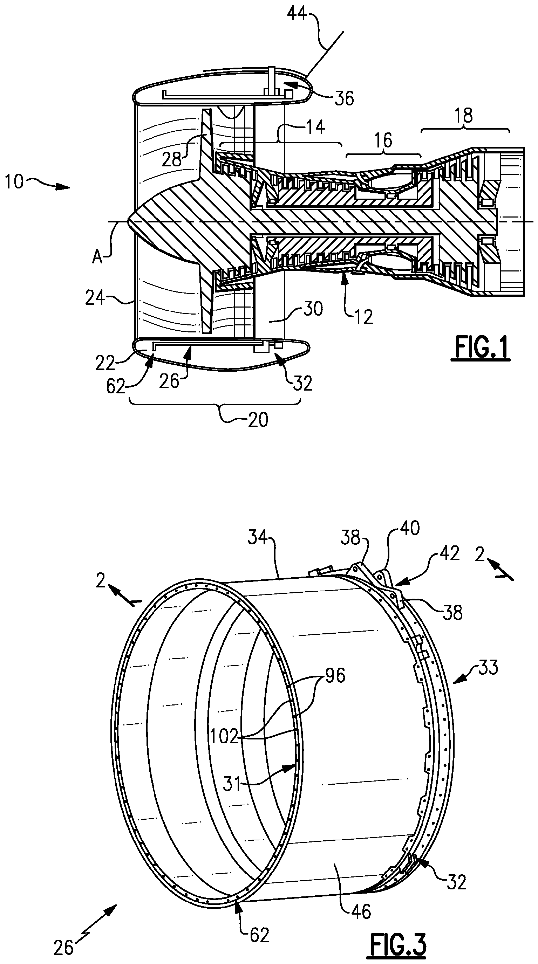

Referring to Figure 1, a gas turbine engine is schematically indicated at 10 and includes a core 12 having a compressor section 14, a combustion section 16 and a turbine section 18. The example gas turbine engine 10 includes a fan section 20 that is disposed within a nacelle 22 and includes a plurality of blades 28. The compressor, combustion, turbine, and fan sections 14, 16, 18 and 20 are arranged about an axis A. The nacelle 22 defines an inlet 24 for incoming airflow. A fan containment case 26 is disposed proximate to the blades 28 within the fan section 20.

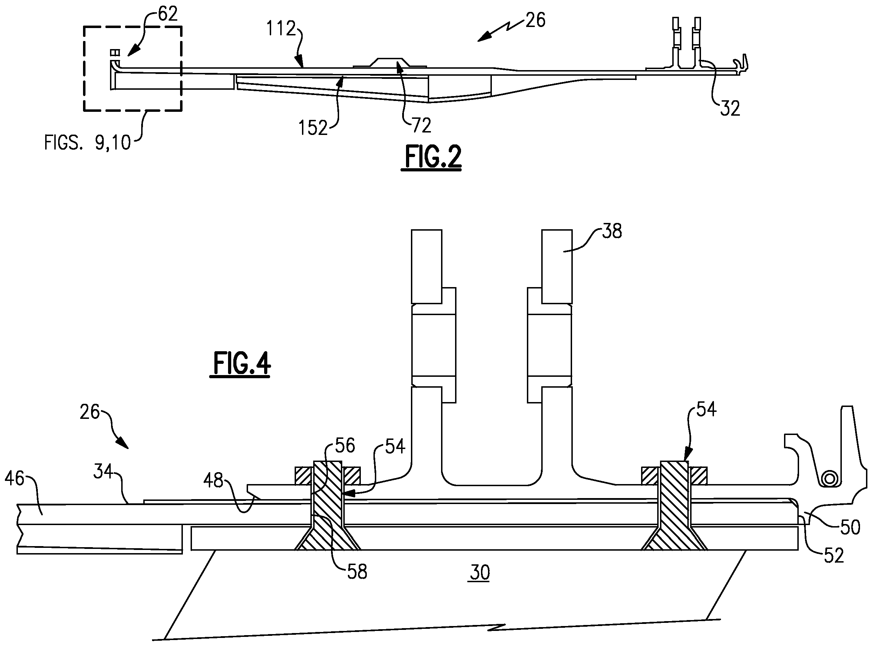

Referring to Figures 2 and 3, the example fan containment case 26 includes attachment features and containment features for a composite containment structure. A mounting ring 32 is provided at the rear 33 of the fan containment case 26, and an attachment flange 62 is provided at its front 31, for securing the fan containment case 26 relative to other engine structure. Bolt attachments 72 are provided on the fan containment case 26 for supporting components on the fan containment case 26. The containment features include a composite containment shell 112 and a ballistic liner 152. These attachment and containment features are fully set forth in patent applications to which this disclosure claims priority.

Returning to Figure 1, the example containment case includes the mount ring 32 attached to a mount beam 36 attached to a frame member such as a pylon 44 of an aircraft. The mount ring 32 is also attached to at least one guide vane section 30 that extends from the engine core 12 to the containment case 26. The example containment case 26 includes the mount ring 32 that supports a portion of the engine core 12. The guide vanes 30 that are disposed rearward of the fan section 20 are static relative to the rotating blades 28 and provide one of several mounting locations that support the engine core 12.

Referring to Figure 3, in one example the mount ring 32 is secured onto an outer surface 34 of the aft end of the fan case 30 and overlaps a portion of the outer surface 34 of the composite containment case 30. The mount ring 32 includes one or more mounting flanges 42. The example mounting flange 42 extends radially outward from the mount ring 32 to provide a connection to the forward primary engine mount beam 36. The example mounting flange 42 includes a fail safe lug 40 that extends upward between primary lugs 38. The mounting flange 42 corresponds to a configuration of the engine mount beam 36 for securing the engine core 12 to the pylon 44 of the aircraft. As appreciated other mounting flange configurations could be utilized with contemplation of this disclosure, for example, as illustrated in Figure 4.

Referring to Figure 4 with continued reference to Figure 3, the example fan containment case 26 includes structure 46 comprised of a plurality of composite layers forming the generally cylindrical geometry of the fan containment case 26. The mount ring 32 fits over the outer surface 34 of the fan containment case 26 and is a forged ring of metal material in one example. The example mount ring 32 includes a lead in chamfer 48 that aids in guiding the mount ring 32 over the fan case 30 during assembly. The mount ring 32 also includes an axial locating feature for installation. The example axial locating feature is a tab 50 that extends radially inward to abut a back end 52 of the composite structure 46. The mount ring 32 is slid onto the outer surface 34 to abut the tab 50 against the back end 52.

Once the mount ring 32 is positioned on the fan case 30, fasteners 54 are arranged through openings 56 within the mount ring 32 and openings 58 in the composite structure 46 to attach the mount ring 32 and the composite structure 46 to the fan exit guide vanes 30. The combination of the interference fit along with the plurality of fasteners 54 secure the mount ring 32 to the composite structure 46. Further, the mount ring 32 is secured to the engine core 12 by way of the guide vanes 30.

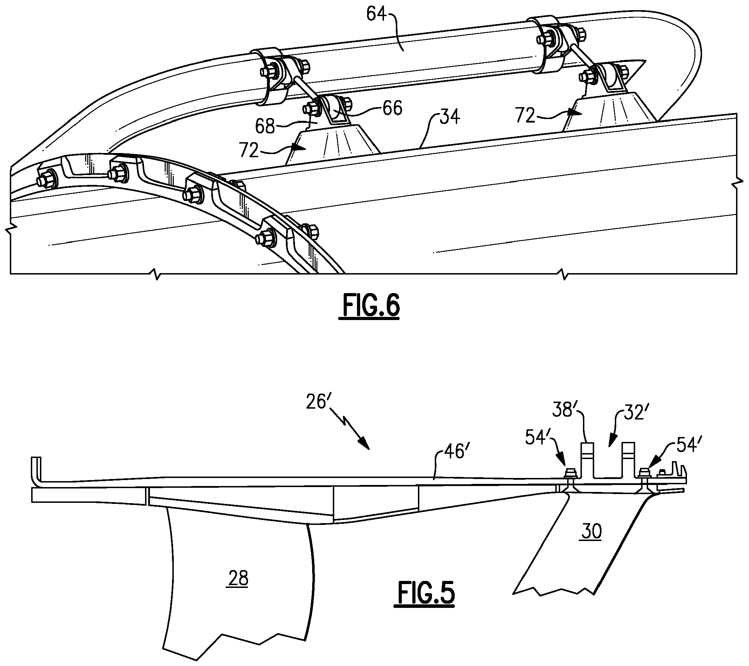

Referring to Figure 5, another fan containment case 26' is shown with a mount ring 32' that is integral with the composite structure 46'. The term "integral" means the mount ring 32' and the composite structure 46' are formed as a single unit. The fan exit guide vanes 30 are secured to the composite structure 46' by fasteners 54' arranged on either axial side of the primary lugs 38'.

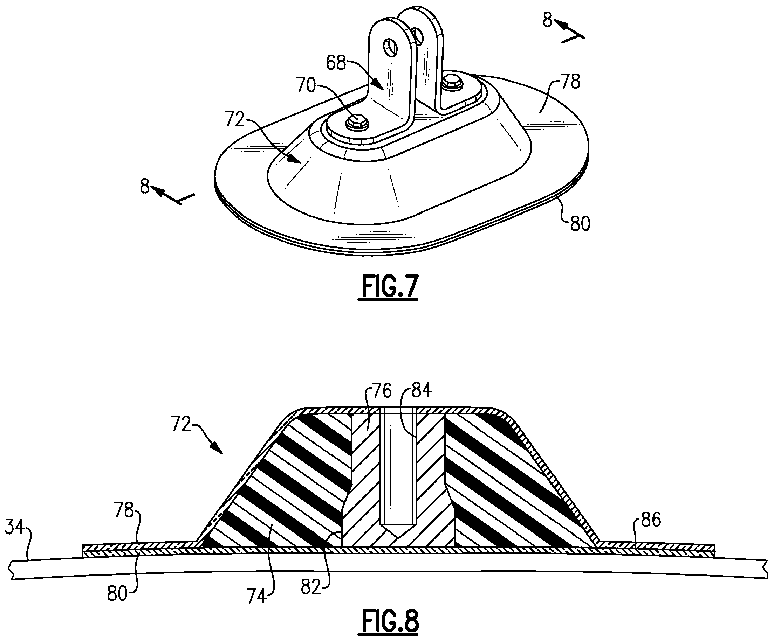

Another attachment feature of the fan containment case 26 is illustrated in Figure 6. The fan containment case 26 has threaded bolt attachments 72 are mounted on the outer surface 34. A component 64 is attached to the attachments 72, such as through pins 66 mounted at a bracket 68. In the example, the component 64 is a fluid tube. Any number of other components, and types of mountings may benefit from the present invention. The bracket 68 is threadingly attached, such as by bolts 70 (see Figure 7), to the attachment 72.

Figures 7 and 8 show a detail of the attachment 72, which includes a molded conical boss which may be formed of a composite material 74 arranged between multiple plies 78, 80. The boss may be any number of different shapes including rectangular, square, oval, etc. Metallic inserts 76 are embedded within the composite material 74. A combination of one or more plies and adhesive 86 are attached to the outer surface of the composite material 74. This combination will be attached to the outer surface 34 of the composite fan containment case 26. The insert 76 has flat ends 82, which prevent rotation within the composite material 74. A portion of the insert includes a hole 84, which will receive a threaded insert (not shown), in one example.

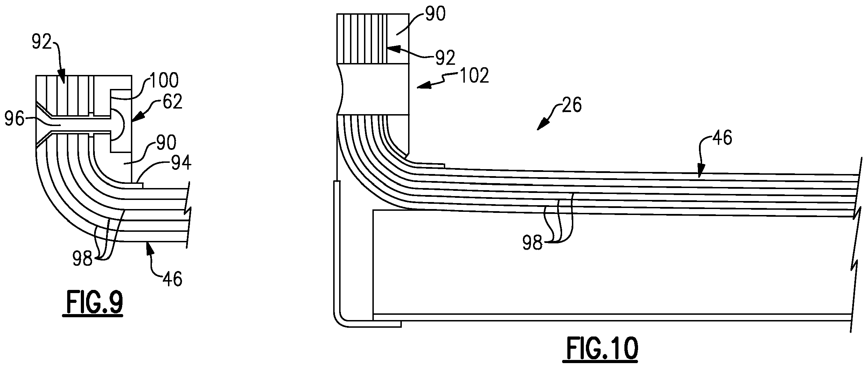

Referring to Figure 9 and 10 with continued reference to Figure 3, an example metallic backing 90 is secured to a forward flange portion 92 of the composite structure 46 with an adhesive 94 and/or mechanical fasteners 96 to provide the attachment flange 62. The composite structure 46 includes multiple layers 98. The example mechanical fasteners 96 comprise rivets that extend through the metallic backing 90 and into the forward flange portion 92. The metallic backing 90 includes counter-bore holes 100 that receive the entire head of the rivet 96 such that the rivet head does protrude from the metallic backing 90. The metallic backing 90 and the composite structure 46 define holes 102 for fasteners utilized to secure the containment case 26 within the nacelle 22. The metallic backing 90 includes a radius that corresponds to the radius of the composite structure 46.

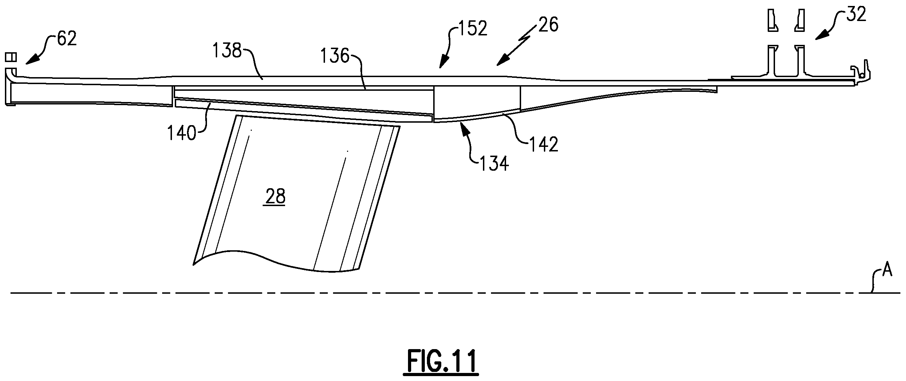

With reference to Figure 11, the fan containment case 26 includes an inner structure 134, a ballistic liner 136, and the outer case 138 defined about the axis A. The inner structure 134 may include an abradable layer 140 and a honeycomb structure 142. The abradable layer 140 provides close tolerances to be maintained between the fan blade tips and the inner structure 134. The honeycomb structure 142 provides acoustic dampening as well as the potential for retention of smaller blade fragments. It should be understood that the inner structure 134 is light weight and provides minimal, if any, resistance to blade fragment penetration.

In one example, the ballistic liner 136 is a cylindrical shell of a rigid material such as a resin impregnated KEVLAR material such as KEVLAR XP™ for Hard Armor, LEXAN, metallic structures, or ceramic materials. That is, the ballistic liner 136 is hard and operates as a rigid impact liner on the radially inner surface of the outer case 138 which may be manufactured of a composite material such as a carbon composite. The ballistic liner 136 need only extend a relatively short axial length as the hard ballistic liner 136 is radially located directly outboard of the fan blades 28.

In another example, the ballistic liner 136 generally includes a plurality of unidirectional roving fiber layers and a plurality of non-crimp fabric layers as described in Applicant's co-pending application entitled "Case with Ballistic Liner," filed on the same date as the present application and which is incorporated by reference in its entirety. Generally, each of the plurality of unidirectional roving fiber layers is about half the thickness of each of the plurality of non-crimp fabric layers. In one embodiment, each of the plurality of unidirectional roving fiber layers includes three plies and each of the plurality of non-crimp fabric layers includes two plies in the ballistic liner 136.

## Claims

1. A fan case (30) for a gas turbine engine (10) comprising:
a composite fan containment case (30) including an outer surface (34), a front (31) and a rear (33);
an attachment flange (62) and a mounting ring (32) respectively provided on the front (31) and the rear (33);
a bolt attachment (72) supported on the outer surface (34); and
wherein the composite fan containment case (30) has a containment shell (112) providing an outer case (138) in a containment area configured to be aligned with a fan blade, and a ballistic liner (136, 152) arranged in the containment area inward of the outer case (138), **characterised in that**
the bold attachment (72) includes an internal composite boss having at least one metallic insert (76), the boss attached to the outer surface (34) with at least one fiber reinforce ply and an adhesive.

2. The fan case according to claim 1, wherein the composite fan containment case (30) includes multiple composite layers defining a generally cylindrical case, an attachment flange (62) extending radially outward from the cylindrical case at the front (31), the attachment flange (62) comprising a portion of the composite layers, and a metallic backing ring secured to the attachment flange.

3. The fan case according to claim 1, wherein the mounting ring (32) is metallic and is secured to the outer surface (34) at the rear (33).

4. The fan case according to claim 1, wherein the composite fan containment case (30) includes multiple composite layers defining a generally cylindrical case, and the mounting ring (32) is integral with the composite layers.

5. The fan case according to claim 1, wherein the ballistic liner (136, 152) is manufactured from one of a resin impregnated KEVLAR, a ceramic material and a metallic material.

6. A fan case (30) for a gas turbine engine comprising (10):
a composite fan containment case (30) including an outer surface (34), a front (31) and a rear (33);
an attachment flange (62) and a mounting ring (32) respectively provided on the front (31) and the rear (33); and
a bolt attachment (72) supported on the outer surface (34), **characterised in that**
the bolt attachment (72) includes an internal composite boss having at least one metallic insert (76), the boss attached to the outer surface (34) with at least one fiber reinforce ply and an adhesive.

7. The fan case according to claim 6, wherein the composite fan containment case (30) includes multiple composite layers defining a generally cylindrical case, an attachment flange (62) extending radially outward from the cylindrical case at the front (31), the attachment flange (62) comprising a portion of the composite layers, and a metallic backing ring secured to the attachment flange (62).

8. The fan case according to claim 6, wherein the mounting ring (32) is metallic and is secured to the outer surface (34) at the rear (33).

9. The fan case according to claim 6, wherein the composite fan containment case (30) includes multiple composite layers defining a generally cylindrical case, and the mounting ring (32) is integral with the composite layers.

## Patentansprüche

1. Gebläsegehäuse (30) für ein Gasturbinentriebwerk (10), umfassend:
ein Gebläsesicherheitsgehäuse aus Verbundstoff (30), das eine Außenfläche (34), eine Vorderseite (31) und eine Rückseite (33) beinhaltet;
einen Befestigungsflansch (62) und einen Montagering (32), die jeweils an der Vorderseite (31) und der Rückseite (33) vorgesehen sind;
eine Schraubenbefestigung (72), die an der Außenfläche (34) getragen wird; und
wobei das Gebläsesicherheitsgehäuse aus Verbundstoff (30) einen Sicherheitsmantel (112), der dafür sorgt, dass ein Außengehäuse (138) in einem Sicherheitsbereich, das dazu konfiguriert ist, an einer Gebläseschaufel ausgerichtet zu sein, und eine Ballistikauskleidung (136, 152) aufweist, die in dem Sicherheitsbereich innerhalb des Außengehäuses (138) angeordnet ist, **dadurch gekennzeichnet, dass**
die Schraubenbefestigung (72) einen inneren Verbundstoffansatz beinhaltet, der wenigstens einen Metalleinsatz (76) aufweist, wobei der Ansatz mit wenigstens einer Faserverstärkungslage und einem Klebstoff an der Außenfläche (34) befestigt ist.

2. Gebläsegehäuse nach Anspruch 1, wobei das Gebläsesicherheitsgehäuse aus Verbundstoff (30) mehrere Verbundstoffschichten beinhaltet, die ein allgemein zylindrisches Gehäuse definieren, wobei sich ein Befestigungsflansch (62) von dem zylindrischen Gehäuse an der Vorderseite (31) radial nach außen erstreckt, wobei der Befestigungsflansch (62) einen Abschnitt der Verbundstoffschichten umfasst und ein Metallverstärkungsring an dem Befestigungsflansch gesichert ist.

3. Gebläsegehäuse nach Anspruch 1, wobei der Montagering (32) aus Metall ist und an der Außenfläche (34) an der Rückseite (33) gesichert ist.

4. Gebläsegehäuse nach Anspruch 1, wobei das Gebläsesicherheitsgehäuse aus Verbundstoff (30) mehrere Verbundschichten beinhaltet, die ein allgemein zylindrisches Gehäuse definieren, und der Montagering (32) einstückig mit den Verbundstoffschichten gebildet ist.

5. Gebläsegehäuse nach Anspruch 1, wobei die Ballistikauskleidung (136, 152) aus einem von einem harzimprägnierten KEVLAR, einem Keramikmaterial und einem Metallmaterial hergestellt ist.

6. Gebläsegehäuse (30) für ein Gasturbinentriebwerk (10), umfassend:
ein Gebläsesicherheitsgehäuse aus Verbundstoff (30), das eine Außenfläche (34), eine Vorderseite (31) und eine Rückseite (33) beinhaltet;
einen Befestigungsflansch (62) und einen Montagering (32), die jeweils an der Vorderseite (31) und der Rückseite (33) vorgesehen sind; und
eine Schraubenbefestigung (72), die an der Außenfläche (34) getragen wird, **dadurch gekennzeichnet, dass**
die Schraubenbefestigung (72) einen inneren Verbundstoffansatz beinhaltet, der wenigstens einen Metalleinsatz (76) aufweist, wobei der Ansatz mit wenigstens einer Faserverstärkungslage und einem Klebstoff an der Außenfläche (34) befestigt ist.

7. Gebläsegehäuse nach Anspruch 6, wobei das Gebläsesicherheitsgehäuse aus Verbundstoff (30) mehrere Verbundstoffschichten beinhaltet, die ein allgemein zylindrisches Gehäuse definieren, wobei sich ein Befestigungsflansch (62) von dem zylindrischen Gehäuse an der Vorderseite (31) radial nach außen erstreckt, wobei der Befestigungsflansch (62) einen Abschnitt der Verbundstoffschichten umfasst und ein Metallverstärkungsring an dem Befestigungsflansch (62)gesichert ist.

8. Gebläsegehäuse nach Anspruch 6, wobei der Montagering (32) aus Metall ist und an der Außenfläche (34) an der Rückseite (33) gesichert ist.

9. Gebläsegehäuse nach Anspruch 6, wobei das Gebläsesicherheitsgehäuse aus Verbundstoff (30) mehrere Verbundstoffschichten beinhaltet, die ein allgemein zylindrisches Gehäuse definieren, und der Montagering (32) einstückig mit den Verbundstoffschichten gebildet ist.

## Revendications

1. Carter de ventilateur (30) pour moteur à turbine à gaz (10) comprenant :
un carter de confinement de ventilateur composite (30) comprenant une surface externe (34), une partie avant (31) et une partie arrière (33) ;
une bride de fixation (62) et une bague de montage (32) disposées respectivement sur la partie avant (31) et sur la partie arrière (33) ;
une fixation par boulons (72) supportée sur la surface externe (34) ; et
dans lequel le carter de confinement de ventilateur composite (30) comprend une enveloppe de confinement (112) fournissant un carter externe (138) dans une zone de confinement conçu pour être aligné avec une pale de ventilateur, et une couche balistique (136, 152) disposée dans la zone de confinement vers l'intérieur du carter externe (138), **caractérisé en ce que**
la fixation par boulons (72) comprend un bossage composite interne comportant au moins un élément inséré métallique (76), le bossage étant fixé à la surface externe (34) avec au moins un pli renforcé en fibres et un adhésif.

2. Carter de ventilateur selon la revendication 1, dans lequel le carter de confinement de ventilateur composite (30) comprend de multiples couches composites définissant un carter généralement cylindrique, une bride de fixation (62) s'étendant radialement vers l'extérieur à partir du carter cylindrique au niveau de la partie avant (31), la bride de fixation (62) comprenant une partie des couches composites, et une bague de support métallique fixée solidement à la bride de fixation.

3. Carter de ventilateur selon la revendication 1, dans lequel la bague de montage (32) est métallique et est fixée solidement à la surface externe (34) au niveau de la partie arrière (33).

4. Carter de ventilateur selon la revendication 1, dans lequel le carter de confinement de ventilateur composite (30) comprend de multiples couches composites définissant un carter généralement cylindrique, et la bague de montage (32) fait partie intégrante des couches composites.

5. Carter de ventilateur selon la revendication 1, dans lequel la couche balistique (136, 152) est fabriquée à partir d'un matériau parmi un KEVLAR imprégné de résine, un matériau céramique et un matériau métallique.

6. Carter de ventilateur (30) pour moteur à turbine à gaz (10) comprenant :
un carter de confinement de ventilateur composite (30) comprenant une surface externe (34), une partie avant (31) et une partie arrière (33) ;
une bride de fixation (62) et une bague de montage (32) disposées respectivement sur la partie avant (31) et sur la partie arrière (33) ; et
une fixation par boulons (72) supportée sur la surface externe (34), **caractérisé en ce que**
la fixation par boulons (72) comprend un bossage composite interne comportant au moins un élément inséré métallique (76), le bossage étant fixé à la surface externe (34) avec au moins un pli renforcé en fibres et un adhésif.

7. Carter de ventilateur selon la revendication 6, dans lequel le carter de confinement de ventilateur composite (30) comprend de multiples couches composites définissant un carter généralement cylindrique, une bride de fixation (62) s'étendant radialement vers l'extérieur à partir du carter cylindrique au niveau de la partie avant (31), la bride de fixation (62) comprenant une partie des couches composites, et une bague de support métallique fixée solidement à la bride de fixation (62).

8. Carter de ventilateur selon la revendication 6, dans lequel la bague de montage (32) est métallique et est fixée solidement à la surface externe (34) au niveau de la partie arrière (33).

9. Carter de ventilateur selon la revendication 6, dans lequel le carter de confinement de ventilateur composite (30) comprend de multiples couches composites définissant un carter généralement cylindrique, et la bague de montage (32) fait partie intégrante des couches composites.
